# EUROPEAN PATENT SPECIFICATION

(11) **EP 4 198 721 B1**
(45) Date of publication and mention of the grant of the patent: **26.03.2025**
(21) Application number: 21857731.0
(22) Date of filing: 19.08.2021
(51) Int. Cl.: G06F 9/451, G06F 3/0482, G06F 3/04842, G06F 3/0488, G06F 9/48

(54) **METHOD FOR STARTING UP TASK, AND ELECTRONIC DEVICE**
VERFAHREN ZUM STARTEN EINER AUFGABE UND ELEKTRONISCHE VORRICHTUNG
PROCÉDÉ DE DÉMARRAGE D'UNE TÂCHE, ET DISPOSITIF ÉLECTRONIQUE

(30) Priority: 21.08.2020 CN 202010851050
(43) Date of publication of application: 21.06.2023
(73) Proprietor: Huawei Technologies Co., Ltd., Shenzhen, Guangdong 518129 (CN)
(72) Inventor: SHI, Yuanchang, Shenzhen, Guangdong 518129 (CN); TIAN, Huajian, Shenzhen, Guangdong 518129 (CN); HU, Jiajia, Shenzhen, Guangdong 518129 (CN); QIU, Hongwei, Shenzhen, Guangdong 518129 (CN)
(74) Representative: Maiwald GmbH
(86) International application number: PCT/CN2021/113492
(87) International publication number: WO 2022/037639

(56) References cited:
- AU-A1- 2018 386 167
- CN-A- 103 942 039
- CN-A- 104 090 720
- CN-A- 104 317 562
- CN-A- 105 335 044
- CN-A- 105 955 802
- CN-A- 107 391 246
- CN-A- 108 182 021
- US-A1- 2018 284 948
- US-A1- 2019 073 123

## Description

### TECHNICAL FIELD

This application relates to the field of intelligent terminal technologies, and in particular, to a task start method and an electronic device.

### BACKGROUND

In an application scenario of the conventional technology, when a user uses an application on a terminal device (for example, a mobile phone) to execute an application task (for example, displaying an email/web page and playing a video), a case in which a new application task (for example, opening a new operation/a browsing page and displaying an instant message) needs to be started often occurs. In an existing operating system, a task jump manner is usually used to start a new application task. However, in most cases, if a task jump for a task B is implemented during running of a task A, the task A is interrupted. For example, an email attachment is opened in a process in which an email is displayed, a web page link in notebook content is opened in a process in which the notebook content is displayed, and a video is temporarily shared with another application when being played. In this way, a task scenario (a scenario of the task A) normally used by the user is forced to be temporarily interrupted, greatly affecting user experience.
Document AU 2018 386 167 A1 discloses a user interface display method and an apparatus, a device, and a storage medium. Document US 2018/284948 A1 discloses a method and an apparatus for a split-window display.

### SUMMARY

The present invention is defined by the appended claims. Insofar, to resolve a problem in the conventional technology that a task scenario is interrupted because a task jump interrupts running of a current task, this application provides a task start method and an electronic device, and this application further provides a computer-readable storage medium.

The following technical solutions are used in embodiments of this application.

According to a first aspect, this application provides a task start method, including:
in a process in which a first task of a first application is run and performed on a screen, when the first task triggers a task jump for a second task, if a window is required to display the second task, invoking a window start interface of a system, where the window start interface is a system-level common standard application programing interface, the window start interface is configured to generate a window parameter of a first floating window, and
that the second task is started based on the window start interface includes:
   when the second task supports floating window display, starting the second task based on a current unchanged display status of the first task, creating the first floating window based on the window start interface, and displaying the second task based on the first floating window, where the display status of the first task includes full-screen display, and/or split-screen display, and/or floating window display.

In a feasible implementation of the first aspect, in a process in which the second task is displayed based on the first floating window, lifecycle statuses of displayed content of the first task and the second task are resumed at the same time.

In a feasible implementation of the first aspect, in a process in which the second task is displayed based on the first floating window, operation controls in the displayed content of the first task and the second task both are in an available status. An operation focus is switched based on an operation of a user between the displayed content of the first task and the displayed content of the second task.

In a feasible implementation of the first aspect, the second task is a task of the first application, or the second task is a task of a second application other than the first application.

In a feasible implementation of the first aspect, after the second task is displayed based on the first floating window, the method further includes:
when the full-screen display for the second task is triggered, and the first task supports the floating window display, closing the first floating window, displaying the second task in a full-screen manner, creating a second floating window, and displaying the first task based on the second floating window.

In a feasible implementation of the first aspect, after the second task is displayed based on the first floating window, the method further includes:
when a current display status of the first task is the full-screen display, when split-screen display for the second task is triggered, and the first task supports the split-screen display, closing the first floating window, and displaying the first task and the second task in a split-screen manner; and/or
when the current display status of the first task is the split-screen display with a third task, when split-screen display for the second task is triggered, and the third task supports the floating window display, closing the first floating window, displaying the first task and the second task in a split-screen manner, creating a second floating window, and displaying the third task based on the second floating window; and/or
when the current display status of the first task is the floating window display, when split-screen display for the second task is triggered, and the first task supports the split-screen display, closing a floating window of the first task and the first floating window, and displaying the first task and the second task in a split-screen manner.

In a feasible implementation of the first aspect, after the second task is displayed based on the first floating window, the method further includes:
when the current display status of the first task is the full-screen display, when a display status exchange for the second task is triggered, and the first task supports the floating window display, closing the first floating window, displaying the second task in a full-screen manner, creating a second floating window, and displaying the first task based on the second floating window, where a size and a position of the second floating window are consistent with a size and a position of the first floating window; and/or
when the current display status of the first task is the split-screen display with the third task, when a display status exchange for the second task is triggered, and the first task supports the floating window display, closing the first floating window, displaying the third task and the second task in a split-screen manner, creating a second floating window, and displaying the first task based on the second floating window, where a size and a position of the second floating window are consistent with a size and a position of the first floating window; and/or
when the current display status of the first task is the floating window display, and a display status exchange for the second task is triggered, positions and window size settings of the floating window of the first task and the first floating window are exchanged to be displayed.

In a feasible implementation of the first aspect, that the second task is started based on the window start interface further includes:
when the second task does not support the floating window display, starting the second task, exiting the first task or running the first task in a background, and displaying the second task in a full-screen manner.

In a feasible implementation of the first aspect, the method further includes:
in a process in which the first task is displayed in a full-screen manner, when a task jump for the second task is triggered, the first application determines whether a window is required to display the second task.

According to a second aspect, this application provides an electronic device. The electronic device includes a memory configured to store computer program instructions and a processor configured to execute the program instructions. When the computer program instructions are executed by the processor, the electronic device is triggered to perform the method steps described in embodiments of this application.

According to a third aspect, this application provides a computer-readable storage medium. The computer-readable storage medium stores a computer program. When the computer program is run on a computer, the computer is enabled to perform the method in embodiments of this application.

According to the foregoing technical solutions provided in embodiments of this application, at least the following technical effects may be implemented.

According to the method in an embodiment of this application, an API is provided to start a specified floating window of an application, and a current task directly triggers to start the floating window. Therefore, a procedure of creating the floating window is greatly simplified. In addition, a current full-screen display page does not need to be exited when a new task is started, thereby ensuring that a task scenario is not interrupted, and greatly improving user experience.

### BRIEF DESCRIPTION OF DRAWINGS

FIG. 1 is a screen diagram of an application scenario of split-screen display according to an embodiment of this application;
FIG. 2 is a flowchart of floating window display according to an embodiment of this application;
FIG. 3 is a scenario diagram of floating window display according to an embodiment of this application;
FIG. 4 is a flowchart of floating window display according to an embodiment of this application;
FIG. 5 is a scenario diagram of floating window display according to an embodiment of this application;
FIG. 6 is a diagram of an application scenario of floating window display according to an embodiment of this application;
FIG. 7 is a diagram of an application scenario of floating window display according to an embodiment of this application;
FIG. 8 is a diagram of an application scenario of floating window display according to an embodiment of this application;
FIG. 9 is a diagram of an application scenario of floating window display according to an embodiment of this application;
FIG. 10 is a diagram of an application scenario of floating window display according to an embodiment of this application;
FIG. 11 is a diagram of an application scenario of floating window display according to an embodiment of this application;
FIG. 12 is a flowchart of task start according to an embodiment of this application;
FIG. 13 is a part of a flowchart of task start according to an embodiment of this application;
FIG. 14 is a part of a flowchart of task start according to an embodiment of this application; and
FIG. 15 is a part of a flowchart of task start according to an embodiment of this application.

### DESCRIPTION OF EMBODIMENTS

To make objectives, technical solutions, and advantages of this application clearer, the following clearly and completely describes the technical solutions of this application with reference to specific embodiments and corresponding accompanying drawings of this application. It is clear that the described embodiments are merely some but not all of embodiments of this application. All other embodiments obtained by a person of ordinary skill in the art based on embodiments of this application without creative efforts shall fall within the protection scope of this application.

Terms used in embodiments of this application are only used to explain specific embodiments of this application, but are not intended to limit this application.

For a problem in the conventional technology that a task scenario is interrupted because a task jump interrupts running of a current task, a feasible solution is to simultaneously run and display two application tasks on a terminal device. In this way, when an operation focus jumps between two tasks displayed on a screen, a display page does not need to be switched, and a task scenario is not interrupted.

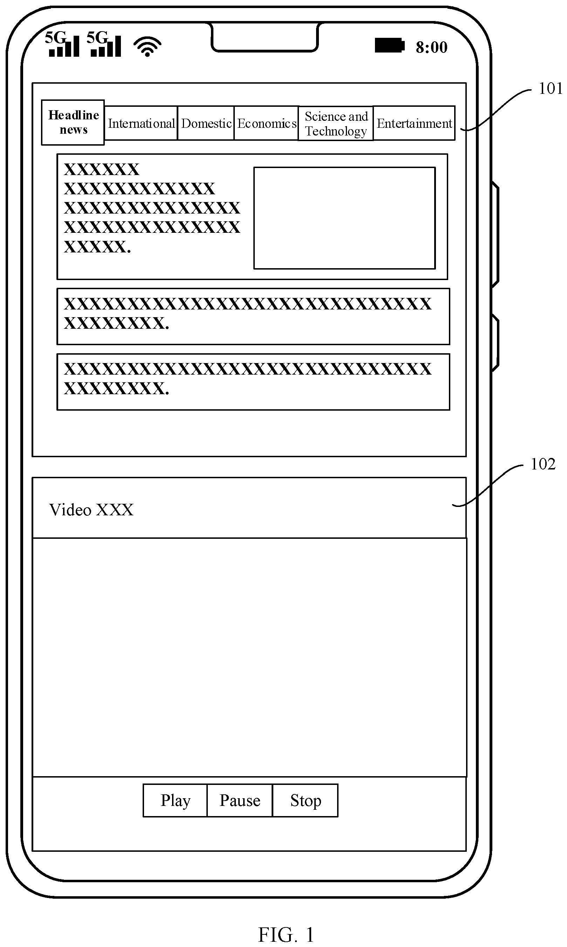

In an actual application scenario, a manner of simultaneously displaying two application tasks is split-screen display. FIG. 1 is a screen diagram of an application scenario of split-screen display according to an embodiment of this application. As shown in FIG. 1, two application screens 101 and 102 are simultaneously displayed on a mobile phone screen in a split-screen manner. A split-screen display solution may be implemented to enable two applications to coexist and simultaneously run. However, compared with full-screen display, the split-screen display is equivalent to narrowing a display screen, causing great inconvenience to screen browsing and a screen operation of a user. Therefore, user experience is unsatisfactory.

In an actual application scenario, a manner of simultaneously displaying two application tasks is floating window display. That is, a floating window is created on the basis of full-screen display of an application task, and another application task is displayed in the floating window. The floating window may be freely moved and zoomed in and out. In this way, flexibility of screen display can be greatly improved, to improve user experience.

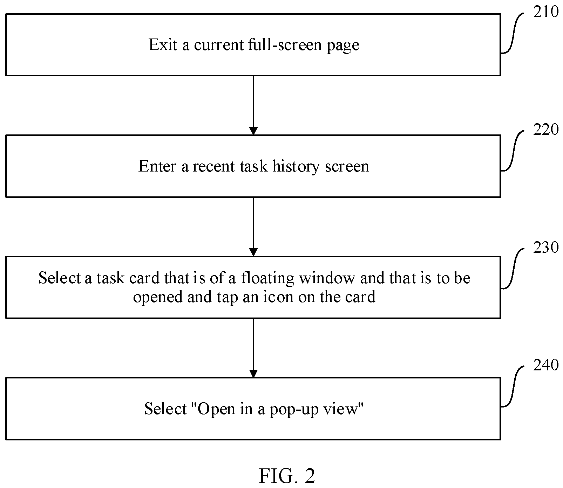

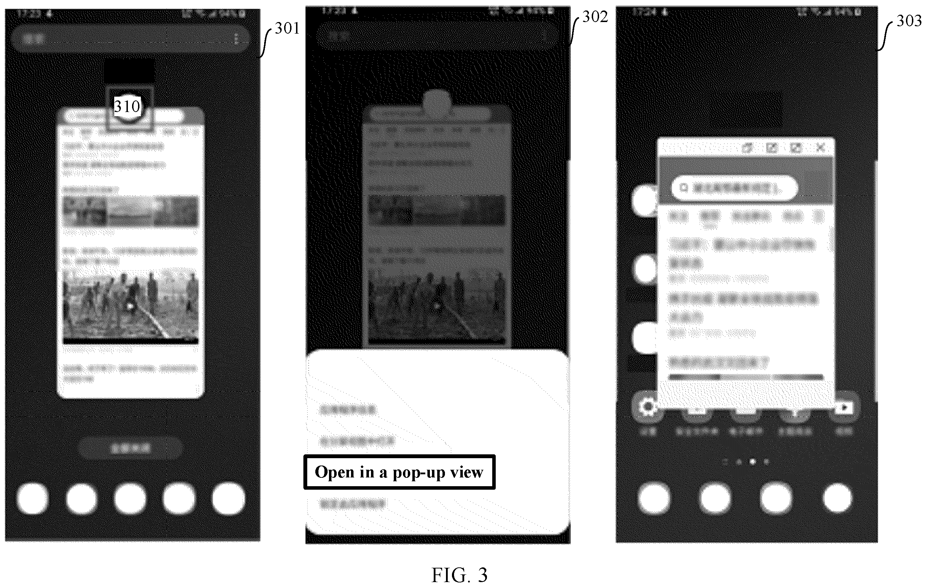

FIG. 2 is a flowchart of floating window display according to an embodiment of this application. FIG. 3 is a scenario diagram of floating window display according to an embodiment of this application.

As shown in FIG. 2, in an implementation solution of starting a floating window, the user performs the following steps to implement floating window display:
Step 210: Exit a current full-screen page.
Step 220: Enter a recent task history screen (for example, tap a nearest key (recent key) during three-key navigation of a mobile phone, or directly slide up through gesture navigation to enter).
Step 230: Select a task card that is of the floating window and that is to be opened (for example, as shown in 301 in FIG. 3), and tap an icon (for example, an icon 310 in FIG. 3) on the card.
Step 240: Select "Open in a pop-up view" (for example, as shown in 302 in FIG. 3).

After an operation of step 240 is performed, the floating window is enabled and displays a task selected by the user (as shown in 303 in the figure).

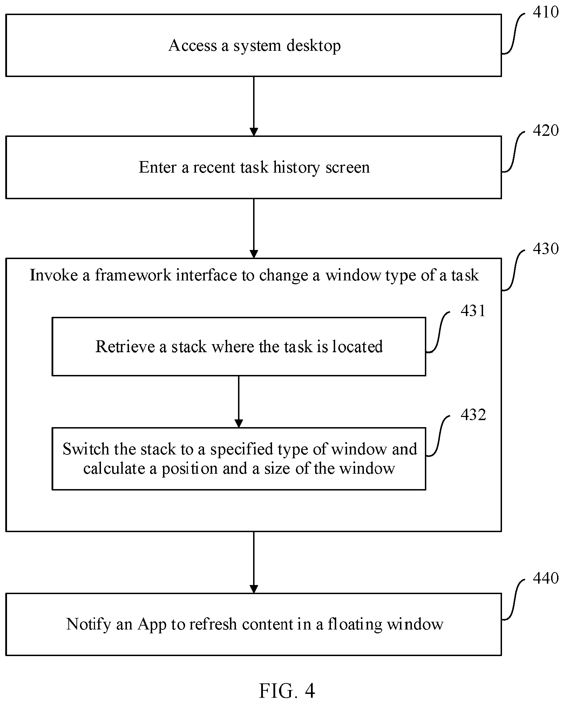

Specifically, in the embodiment shown in FIG. 2, window types of task cards on a full screen are switched to achieve an objective of entering the floating window. FIG. 4 is a flowchart of floating window display according to an embodiment of this application. As shown in FIG. 4, a system performs the following steps to implement floating window display:
Step 410: Enter a system desktop.
Step 420: Enter a recent task history screen.
Step 430: Invoke a framework (Framework) interface to change a window type of a task (Task), which includes:
Step 431: Retrieve a stack (Stack) in which the task is located.
Step 432: Switch the stack to a specified type of window and calculate a position and a size of the window.
Step 440: Notify an App to refresh content in the floating window.

The foregoing solution can implement the floating window display, to display a plurality of application tasks on one page. However, in the foregoing solution, to start the floating window to display a task, the task needs to be first opened in a full-screen manner. A task that is not opened cannot be started by using the floating window. In addition, when a floating window is started to display a task, an original task needs to be interrupted, and a switch is performed in recent task history. An operation process is relatively long, and operation experience of the user is still quite poor.

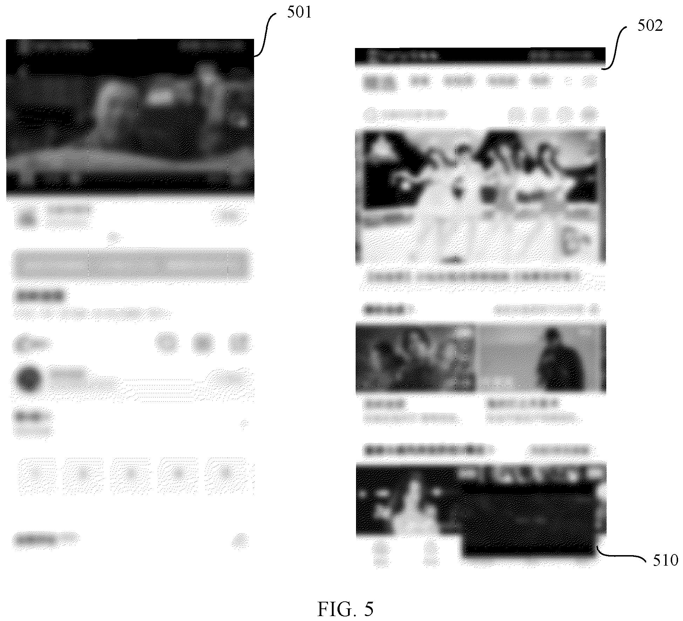

In another implementation solution of starting the floating window, the floating window is started in a picture-in-picture mode. For example, when playing a video, a video player needs to display a playing screen in a floating manner. FIG. 5 is a scenario diagram of floating window display according to an embodiment of this application. As shown in FIG. 5, a video is played on a screen shown in 501, and a video playing page is enabled to become a picture-in-picture floating window by tapping a button on the video playing page. As shown in 502 in the figure, when a video is played in a picture-in-picture floating window 510, a full-screen main page may perform page display and accept an operation of the user.

Although starting the floating window in the picture-in-picture mode simplifies a process of starting the floating window, and does not interrupt an application scenario of the full-screen main page when the floating window is started, the picture-in-picture mode needs to first start a target page, and then tap a button of the target page to trigger the page to become a picture-in-picture. The picture-in-picture mode cannot directly start a target floating window in one step. A floating window in the picture-in-picture mode cannot receive an input event of the user to perform an interactive operation, can only display content, and cannot freely receive input of the user for interaction. For example, the floating window 510 cannot perform a sliding action such as video fast-forward.

For the foregoing problem, in an embodiment of this application, a window start interface for creating a floating window is constructed, where the interface is a system-level common standard application programing interface (Application Programming Interface, API). The window start interface is configured to generate a window parameter (for example, a size and a position of a window) of the floating window. When a new task is required to be started to perform a task jump, the window start interface is directly invoked to construct a floating window, to start the new task and display the new task in the floating window.

Specifically, in a process in which the task A is displayed in a full-screen manner, when the task A triggers a task jump for the task B, the window start interface of the system is invoked. That the task B is started based on the window start interface includes:
starting the task B based on the full-screen display of the task A, creating a floating window A based on the window start interface, and displaying the task B based on the floating window A.

According to the method in an embodiment of this application, the API is provided to start a specified floating window of an application, and a current task directly triggers to start the floating window. The triggering is more convenient and freer. Therefore, a procedure of creating the floating window is greatly simplified. In addition, a current full-screen display page does not need to be exited when a new task is started, thereby ensuring that a task scenario is not interrupted, and greatly improving user experience.

Further, according to the method in an embodiment of this application, in addition to implementing multi-task parallelism, a started floating window can be freely dragged and moved, and there is no limitation that the window cannot be moved in a split-screen manner. This greatly facilitates an operation of the user.

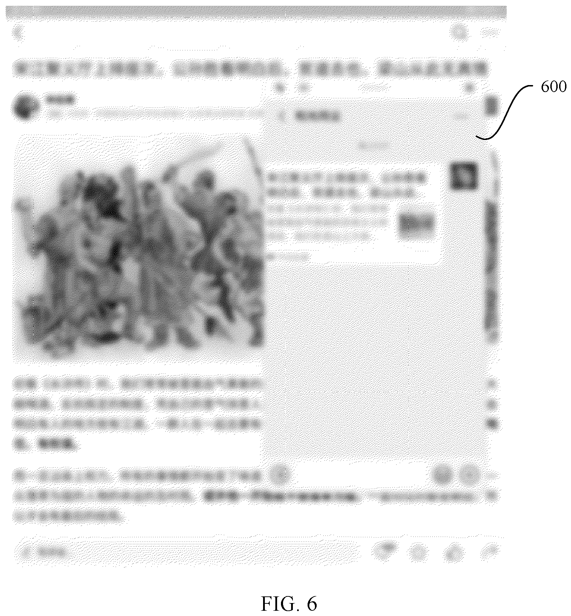

A specific application scenario is used as an example. FIG. 6 is a diagram of an application scenario of floating window display according to an embodiment of this application. As shown in FIG. 6, a user shares a news link to a communication application when reading news in a full-screen manner, and a task jump for a communication task is triggered. On the premise that full-screen display of news content is maintained, a floating window 600 is created, and a communication screen of the communication application is displayed in the floating window 600. The user can share a news link and view a sharing result by performing input on the communication screen. In addition, because the news content is always displayed in a full-screen manner, a news reading application scenario of the user is not interrupted, and a case in which the user cannot continue to read the news because a news page is closed does not occur.

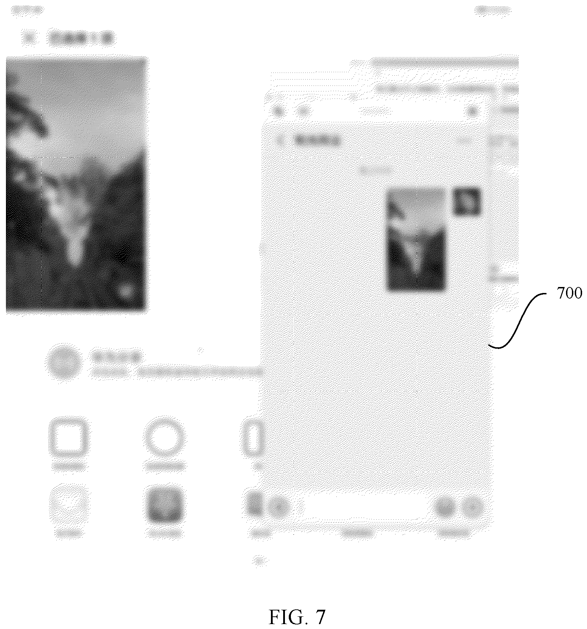

FIG. 7 is a diagram of an application scenario of floating window display according to an embodiment of this application. As shown in FIG. 7, a user shares a specified picture to a communication application when browsing a gallery in a full-screen manner, and a task jump for a communication task is triggered. On the premise that full-screen display of a gallery page is maintained, a floating window 700 is created. A communication screen of the communication application is displayed in the floating window 700. The user can share a picture and view a sharing result by performing input on the communication screen. In addition, because the gallery is always displayed in a full-screen manner, a gallery browsing application scenario of the user is not interrupted, and a case in which the user cannot successfully find a previous browsing position because the gallery page is closed does not occur.

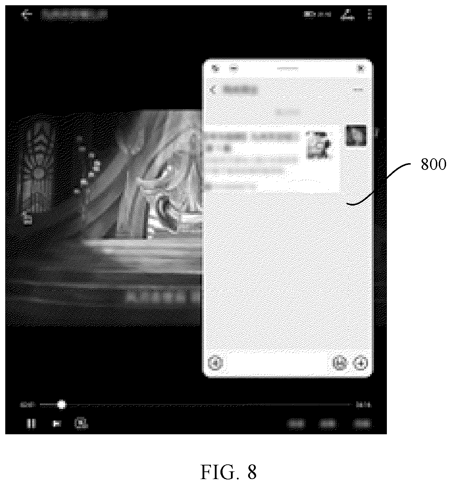

FIG. 8 is a diagram of an application scenario of floating window display according to an embodiment of this application. As shown in FIG. 8, a user shares a video link to a communication application when watching a video in a full-screen manner, and a task jump for a communication task is triggered. On the premise that full-screen display of a gallery page is maintained, a floating window 800 is created. A communication screen of the communication application is displayed in the floating window 800. The user can share a video link and view a sharing result by performing input on the communication screen. In addition, because a video is always displayed in a full-screen manner, a video playing application scenario of the user is not interrupted, and a case in which the user needs to re-open the video because the video playing page is closed and video playing is interrupted does not occur.

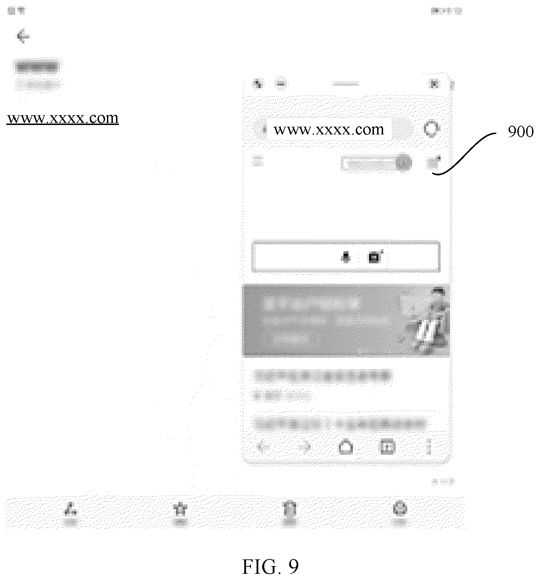

FIG. 9 is a diagram of an application scenario of floating window display according to an embodiment of this application. As shown in FIG. 9, a user needs to open a URL link in a memo when using the memo in a full-screen manner, and therefore a task jump for a web browser is triggered. On the premise that full-screen opening of the memo is maintained, a floating window 900 is created. A browsing screen of the web browser is displayed in the floating window 900. Because the memo is always opened in a full-screen manner, a use scenario of the memo of the user is not interrupted.

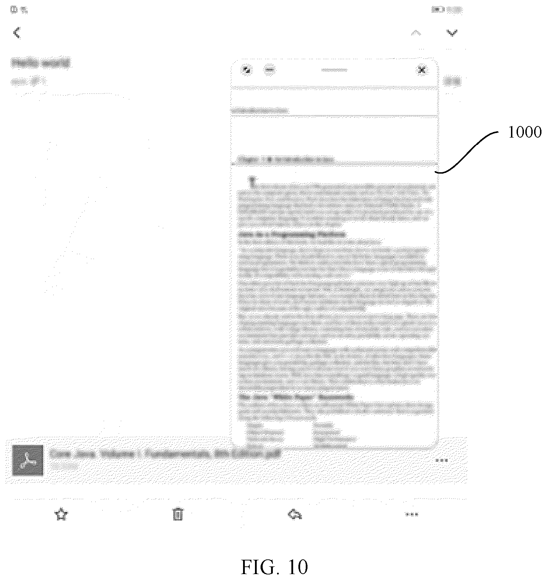

FIG. 10 is a diagram of an application scenario of floating window display according to an embodiment of this application. As shown in FIG. 10, a user needs to open an attachment document of an email when using a mailbox application in a full-screen manner, and therefore a task jump for a document processing application is triggered. On the premise that full-screen opening of the mailbox application is maintained, a floating window 1000 is created. A browsing screen of the document processing application is displayed in the floating window 1000. Because the mailbox application is always opened in a full-screen manner, a use scenario of the mailbox application of the user is not interrupted.

Further, in an actual application scenario, when the task A triggers a task jump for the task B, the task A may not be in a full-screen display status. For example, the task A is currently in a floating window display status, or the task A and a task C are currently displayed in a split-screen manner.

For the foregoing case, in an embodiment of this application, in a process in which the task A is run and displayed on a screen, when the task A triggers a task jump for the task B, the window start interface of the system is invoked. That the task B is started based on the window start interface includes:
starting the task B based on a current unchanged display status of the task A, creating a floating window A based on the window start interface, and displaying the task B based on the floating window A, where the display status of the task A includes full-screen display, and/or split-screen display, and/or floating window display.

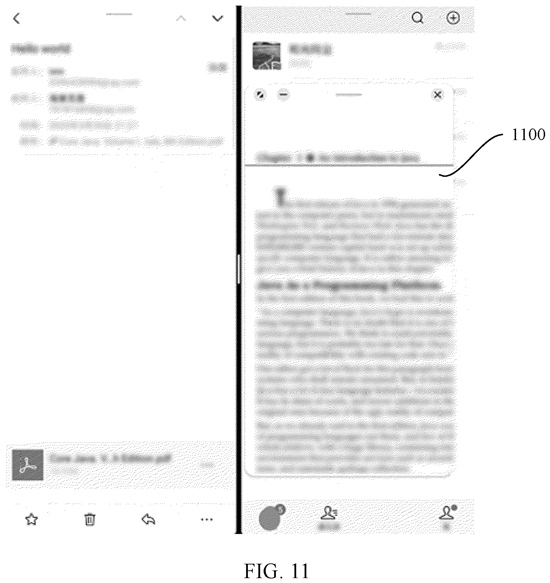

For example, FIG. 11 is a diagram of an application scenario of floating window display according to an embodiment of this application. As shown in FIG. 11, a mailbox application and a communication application are displayed in a split-screen manner. A user needs to open an attachment document of an email when using the mailbox application in a full-screen manner, and therefore a task jump for a document processing application is triggered. On the premise that full-screen opening of the mailbox application is maintained, a floating window 1000 is created. A browsing screen of the document processing application is displayed in the floating window 1000. Because the mailbox application and the communication application are always displayed in a split-screen manner, use scenarios of the mailbox application and the communication application of the user are not interrupted.

Further, in some task jump application scenarios, a previous task does not need to be retained to continue to be displayed on a screen. For example, when opening a new application by using an application promotion screen, the user usually does not need to browse the application promotion screen anymore. In this case, the new application may be directly displayed in a full-screen manner, instead of being displayed in a floating window with the application promotion screen being displayed.

Therefore, in an embodiment of this application, in a process in which the task A is run and displayed on the screen, when a task jump for the task B is triggered, if a window is required to display the task B, the window start interface of the system is invoked, and the task B is started based on the window start interface. If no window is required to display the task B, the task A is exited or the task A is run in a background, the task B is started, and the task B is displayed in a full-screen manner.

Further, because design architectures of different applications are different, display manners supported by different applications may also be different, and some applications may not support floating window display. For this problem, in an embodiment of this application, in a process in which the task B is started based on the window start interface, when the task B supports the floating window display, the task B is started based on a current unchanged display status of the task A, a floating window A is created based on the window start interface, and the task B is displayed based on the floating window A. When the task B does not support the floating window display, the task A is exited or the task A is run in a background, the task B is started, and the task B is displayed in a full-screen manner.

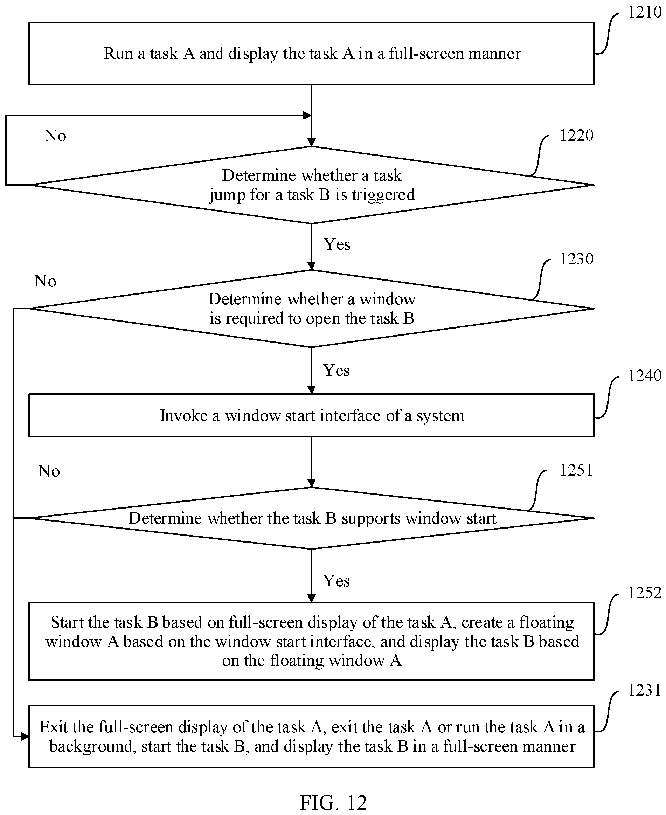

FIG. 12 is a flowchart of task start according to an embodiment of this application. An application scenario of full-screen display of the task A is used as an example. As shown in FIG. 5, the system performs the following steps to start a new task:
Step 1210: Run a task A, and display the task A in a full-screen manner.
Step 1220: Determine whether a task jump for a task B is triggered.

If the task jump for the task B is not triggered, go back to step 1220.

If the task jump for the task B is triggered, perform step 1230.

Step 1230: Determine whether a window is required to open the task B.

If no window is required to open the task B, perform step 1231.

If a window is required to open the task B, perform step 1240.

Step 1231: Exit full-screen display of the task A, exit the task A or run the task A in a background, start the task B, and display the task B in a full-screen manner.

Step 1240: Invoke a window start interface of a system.

That the task B is started based on the window start interface includes the following steps:
Step 1251: Determine whether the task B supports window start.

If the task B does not support window start, perform step 1231.

If the task B supports window start, perform step 1252.

Step 1252: Start the task B based on the full-screen display of the task A, create a floating window A based on the window start interface, and display the task B based on the floating window A.

Further, in an embodiment of this application, in step 1230, the user determines whether a window is required to open the task B. For example, after a task jump for task B is triggered, an opening manner selection screen is output to the user, and the user selects whether the task B is opened in a window manner.

Further, in an embodiment of this application, in step 1230, a device determines whether a window is required to open the task B. Specifically, the device determines whether the user still needs to browse a display page of the task A, and determines, when the display page of the task A is closed, whether full-screen display of the task B affects user experience. If the user still needs to browse the display page of the task A, and the display page of the task A is closed, the full-screen display of the task B degrades user experience and it is determined that a window is required to open the task B.

For example, in an application scenario, the device determines whether current displayed content of the task A includes content other than task jump-related content. When the current displayed content of the task A does not include the content other than the task jump-related content, it is determined that no window is required to open the task B. For example, current displayed content of the task A is an application promotion page, and all content on the application promotion page points to a task jump for the task B (starting a new application). Therefore, when the user triggers the task jump for the task B (starting a new application) on the application promotion page displayed by the task A, the user does not need to browse a new application promotion, but needs to directly use a new application. Therefore, the device determines that no window is required to open the task B.

For example, in an application scenario, the device determines, based on current displayed content of the task A, whether full-screen opening of the task B affects the user's browsing and operation. When the device determines that the full-screen opening of the task B does not affect the user's browsing and operation, the device determines that no window is required to open the task B. For example, when the current displayed content of the task A is a last page of a novel page, a recommendation link is provided at the end of novel content. When the user taps the recommendation link at the end of the novel content on a display page of the task A, it may be considered that the user has finished reading the novel content. In this case, switching of a full-screen page does not affect browsing experience of the user. Therefore, when the user taps the recommendation link to trigger a task jump for the task B (starting a recommendation page), the device determines that no window is required to open the task B.

Further, to accurately determine whether the user still needs to browse the display page of the task A, in an embodiment of this application, an application A that executes the task A performs step 1230.

Further, in an embodiment of this application, an application that executes the task A and an application that executes the task B may be a same application, or may be different applications. That is, in an application scenario, in a process in which the application A executes the task A, when a task jump of the task B for the application A is triggered, the application A invokes a window start interface of a system and starts the task B based on the window start interface, where the application A executes the task A and the task B in parallel. In another application scenario, in a process in which the application A executes the task A, when a task jump of the task B for an application B is triggered, the application A invokes the window start interface of the system, and sends, to the system based on the window start interface, a related parameter that starts the task B. The system starts the application B, and the application B starts the task B, where the application A and the application B are run in parallel.

Further, considering that the application A that executes the task A and the application B that executes the task B are different applications, the application A cannot accurately determine whether running of the application B through full-screen display/window display conflicts with full-screen display of the application A. Therefore, in an embodiment of this application, when it is determined whether a window is required to display the task B, based on the determining of the application A, the system is further instructed to determine whether running of the application B through full-screen display/window display conflicts with full-screen display of the application A.

Further, in an actual application scenario, there may be a plurality of applications that can be used to execute the task B. Therefore, in an embodiment of this application, in a process in which the task B is started based on the window start interface, when there are a plurality of applications that can be used to execute the task B, an application that executes the task B needs to be first determined.

Specifically, in an application scenario, when there are a plurality of applications that can be used to execute the task B, an application selection screen is output to the user, and the user determines a specific application that is to be used to start the task B. In an application scenario, when there are a plurality of applications that can be used to execute the task B, a preset application is used to start the task B based on a type of the task B. Further, to avoid a display conflict as much as possible, in an application scenario, when there are a plurality of applications that can be used to execute the task B, if an application that executes the task A can be used to execute the task B, the application that executes the task A is used to start the task B.

Further, in an embodiment of this application, when the application A that executes the task A and the application B that executes the task B are different applications, the system transfers, to the application B, a request for starting the task B by using a window of the application A, to ensure that an application request target can be achieved. If the application B does not support opening through a floating window, the system automatically opens the application B in a full-screen manner. The application A does not need to determine whether the application B supports the floating window, and the system hosts all requests of the application A. Therefore, the application A does not need to perform any validity check. This greatly reduces an amount of processing that the application A needs to perform, thereby reducing workload of an application developer.

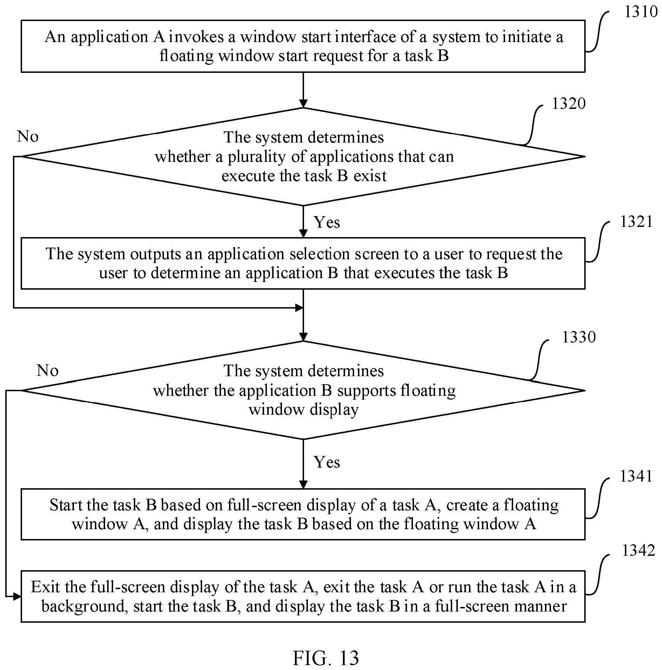

FIG. 13 is a part of a flowchart of task start according to an embodiment of this application. As shown in FIG. 13:
Step 1310: The application A invokes a window start interface of the system to initiate a floating window start request for the task B.
Step 1320: The system determines whether a plurality of applications that can execute the task B exist.

If the plurality of applications that can execute the task B exist, perform step 1321.

If only one application B that can execute the task B exists, perform step 1330.

Step 1321: The system outputs an application selection screen to the user to request the user to determine the application B that executes the task B.

Step 1330: The system determines whether the application B supports floating window display.

When the application B supports the floating window display, perform step 1341.

When the application B does not support the floating window display, perform step 1342.

Step 1341: Start the task B based on the full-screen display of the task A, create a floating window A, and display the task B based on the floating window A.

Step 1342: Exit full-screen display of the task A, exit the task A or run the task A in a background, start the task B, and display the task B in a full-screen manner.

Further, to ensure that a task scenario is not interrupted and to ensure user experience, in an embodiment of this application, in a process in which the task B is displayed based on the floating window, lifecycle statuses of displayed content of the task A and the task B are resumed (Resume) at the same time. Specifically, in an application scenario, the system ensures that a full-screen/split-screen/floating window that displays the task A coexists with a floating window A that displays the task B, and the task A and the task B are in a resumed lifecycle status, so that services of a plurality of windows are not interrupted.

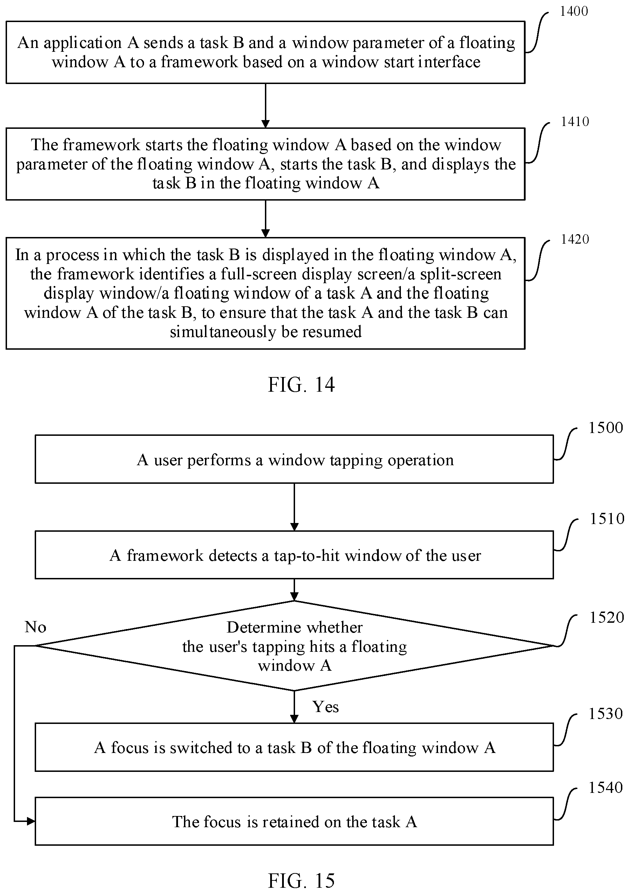

FIG. 14 is a part of a flowchart of task start according to an embodiment of this application. As shown in FIG. 7:
Step 1400: The application A sends the task B and a window parameter (for example, a type of a window) of a floating window A to a system framework (Framework) based on a window start interface.
Step 1410: The system framework (Framework) starts the floating window A based on the window parameter of the floating window A, starts the task B, and displays the task B in the floating window A.
Step 1420: In a process in which the task B is displayed in the floating window A, the system framework (Framework) identifies a full-screen display screen/a split-screen display window/a floating window of the task A and a floating window A of the task B, to ensure that the task A and the task B can simultaneously be resumed.

Further, in an embodiment of this application, in a process in which the task B is displayed based on the floating window, both operation controls in displayed content of the task A and the task B are in an available status. An operation focus is switched based on an operation of the user between the displayed content of the task A and the displayed content of the task B. Specifically, in an application scenario, the system framework (Framework) ensures that the user taps different windows to switch a focus onto a tapped window, thereby ensuring a correct focus switching process. In terms of level management, a level of the floating window is higher than that of a full-screen or a split-screen. A level of a full-screen page is the same as that of the split-screen.

FIG. 15 is a part of a flowchart of task start according to an embodiment of this application. Full-screen display of the task A is used as an example. It is assumed that a current focus is on the full-screen display of the task A, as shown in FIG. 8.

Step 1500: The user performs a window tapping operation.

Step 1510: The system framework (Framework) detects a tap-to-hit window of the user.

Step 1520: Determine whether the user's tapping hits a floating window A.

If the user's tapping hits the floating window A, perform step 1530.

If the user's tapping does not hit the floating window A, perform step 1540.

Step 1530: A focus is switched to the task B of the floating window A.

Step 1540: The focus is retained on the task A.

Further, in an actual application scenario, a browsing/operation requirement of the user is not unchanged. In the process in which the floating window A is used to display the task B, the user may need to display the task B in a full-screen manner. For a requirement of the user for displaying the task B in a full-screen manner, a feasible solution is to directly close a display screen of the task A and display the task B in a full-screen manner. However, this completely interrupts a task scenario of the task A. For this problem, to avoid completely interrupting the task scenario of the task A, in an embodiment of this application, after the task B is displayed based on the floating window A, when full-screen display of the task B is triggered, and the task A supports floating window display, the floating window A is closed, the task B is displayed in a full-screen manner, a floating window C is created, and the task A is displayed based on the floating window C.

Further, in an actual application scenario, in a process in which the floating window A is used to display the task B, the user may need to display the task B and the task B in a split-screen manner. For this application requirement, in an embodiment of this application, after the task B is displayed based on the floating window A, when a current display status of the task A is full-screen display, when split-screen display of the task B is triggered, and the task A supports split-screen display, the floating window A is closed, and the task A and the task B are displayed in a split-screen manner.

When the current display status of the task A is split-screen display with a task C, when split-screen display of the task B is triggered, and the task C supports floating window display, the floating window A is closed, the task A and the task B are displayed in a split-screen manner, a floating window B is created, and the task C is displayed based on the floating window B,
and/or
when the current display status of the task A is the floating window display, when split-screen display of the task B is triggered, and the task A supports the split-screen display, a floating window of the task A and the floating window A are closed, and the task A and the task B are displayed in a split-screen manner.

Further, in an actual application scenario, in a process in which the floating window A is used to display the task B, an attention point of the user switches between the task A and the task B. When the attention point of the user is switched from the task A to the task B, to ensure visual experience of the user, a preferred solution is to exchange display manners of the task A and the task B. For example, a display manner of the attention point of the task B is switched to full-screen display, and a display manner of the task A is switched to floating window display. Therefore, in an embodiment of this application, a display status exchanging mode is provided.

Specifically, in an embodiment of this application, after the task B is displayed based on the floating window A,
when a current display status of the task A is full-screen display, when a display status exchange for the task B is triggered, and the task A supports floating window display, the floating window A is closed, the task B is displayed in a full-screen manner, a floating window B is created, and the task A is displayed based on the floating window B, where a size and a position of the floating window B are consistent with a size and a position of the floating window A,
   and/or
when the current display status of the task A is split-screen display with the task C, when a display status exchange for the task B is triggered, and the task A supports floating window display, the floating window A is closed, the task C and the task B are displayed in a split-screen manner, a floating window B is created, and the task A is displayed based on the floating window B, where a size and a position of the floating window B are consistent with a size and a position of the floating window A,
   and/or
when the current display status of the task A is the floating window display, and the display status exchange for the task B is triggered, positions and window size settings of the floating window of the task A and the floating window A are exchanged to be displayed.

It may be understood that some or all of the steps or operations in the foregoing embodiment are merely examples. In this embodiment of this application, other operations or variations of various operations may also be performed. In addition, the steps may be performed in an order different from the order presented in the foregoing embodiment, and it may not be necessary to perform all the operations in the foregoing embodiment.

Further, according to the task start method provided in embodiments of this application, an embodiment of this application further provides a task start apparatus. The apparatus includes:
an interface invoking module, configured to: in a process in which a first task of a first application is run and performed on a screen, when the first task triggers a task jump for a second task, if a window is required to display the second task, invoke a window start interface of a system, where the window start interface is a system-level common standard application programing interface, and the window start interface is configured to generate a window parameter of a first floating window; and
a task start module, configured to start a second task based on the window start interface, including:
   when the second task supports floating window display, starting the second task based on a current unchanged display status of the first task, creating the first floating window based on the window start interface, and displaying the second task based on the first floating window, where a display status of the first task includes full-screen display, and/or split-screen display, and/or floating window display.

Further, in the 1990s, whether technical improvement is hardware improvement (for example, improvement of circuit structures such as a diode, a transistor, or a switch) or software improvement (improvement of a method procedure) can be clearly distinguished. However, as the technology develops, current improvement of many method procedures can be considered as direct improvement of a hardware circuit structure. A designer usually programs an improved method procedure into a hardware circuit, to obtain a corresponding hardware circuit structure. Therefore, a method procedure can be improved by using a hardware entity module. For example, a programmable logic device (Programmable Logic Device, PLD) (for example, a field programmable gate array (Field Programmable Gate Array, FPGA)) is an integrated circuit, and a logical function of the programmable logic device is determined by programming a component by an accessor. The designer can "integrate" a digital device on a piece of PLD by programming, and there is no need for a chip manufacturer to design and manufacture an application-specific integrated circuit chip. In addition, currently, instead of manually manufacturing an integrated circuit chip, such programming is usually implemented by using "logic compiler (logic compiler)" software, which is similar to a software compiler used during program development and writing. Original code to be compiled needs to be written in a specific programming language, which is referred to as a hardware description language (Hardware Description Language, HDL). There is not only one HDL. There are many HDLs such as an ABEL (Advanced Boolean Expression Language), an AHDL (Altera Hardware Description Language), Confluence, a CUPL (Cornell University Programming Language), HDCal, a JHDL (Java Hardware Description Language), Lava, Lola, MyHDL, PALASM, and an RHDL (Ruby Hardware Description Language). Currently, a VHDL (Very-High-Speed Integrated Circuit Hardware Description Language) and Verilog are most commonly used. A person skilled in the art should also understand that a hardware circuit that implements a logical method procedure can be readily obtained once the method procedure is logically programmed by using the several described hardware description languages and is programmed into an integrated circuit.

The controller may be implemented in any suitable manner. For example, the controller may use a microprocessor or a processor and a computer-readable medium storing computer-readable program code (for example, software or firmware) performed by the microprocessor or the processor, a logic gate, a switch, an application-specific integrated circuit (Application Specific Integrated Circuit, ASIC), a programmable logic controller, and an embedded microcontroller. Examples of the controller include but are not limited to the following microcontrollers: ARC 625D, Atmel AT91SAM, Microchip PIC18F26K20, and Silicone Labs C8051F320. A memory controller may further be implemented as a part of control logic of a memory. A person skilled in the art also knows that, in addition to implementing the controller by using the computer-readable program code, logic programming can be performed on method steps to allow the controller to implement a same function in forms of the logic gate, the switch, the application-specific integrated circuit, the programmable logic controller, and the embedded microcontroller. Therefore, the controller can be considered as a hardware component, and an apparatus configured to implement various functions in the controller can also be considered as a structure in the hardware component. Alternatively, the apparatus configured to implement various functions can even be considered as both a software module implementing the method and a structure in the hardware component.

In the description of embodiments of this application, for ease of description, the apparatus is described based on functions to separately describe modules. Division of modules is merely logical function division. During implementation of embodiments of this application, functions of modules may be implemented in one or more pieces of software and/or hardware.

Specifically, the apparatus provided in this embodiment of this application may be fully or partially integrated into one physical entity, or may be physically separated during actual implementation. In addition, all of these modules may be implemented in a form of software invoked by using a processing element, or may be implemented in a form of hardware; or some of the modules may be implemented in a form of software invoked by using a processing element, and some of the modules are implemented in a form of hardware. For example, a detection module may be a separately disposed processing element, or may be integrated into a chip of an electronic device for implementation. Implementation of another module is similar to this. In addition, all or some of these modules may be integrated together, or may be independently implemented. In an implementation process, steps in the foregoing methods or the foregoing modules can be implemented by using a hardware integrated logical circuit in the processing element, or by using instructions in a form of software.

For example, the foregoing modules may be configured as one or more integrated circuits that implement the foregoing methods, for example, one or more application-specific integrated circuits (Application Specific Integrated Circuit, ASIC), one or more digital signal processors (Digital Singnal Processor, DSP), or one or more field programmable gate arrays (Field Programmable Gate Array, FPGA). For another example, these modules may be integrated together, and implemented in a form of a system-on-a-chip (System-On-a-Chip, SOC).

An embodiment of this application further provides an electronic device. The electronic device includes a memory configured to store computer program instructions and a processor configured to execute the program instructions. When the computer program instructions are executed by the processor, the electronic device is triggered to perform the method steps described in embodiments of this application.

Specifically, in an embodiment of this application, the one or more computer programs are stored in the memory, and the one or more computer programs include instructions. When the instructions are executed by the device, the device is enabled to perform the method steps in embodiments of this application.

Specifically, in an embodiment of this application, the processor of the electronic device may be a system-on-a-chip SoC, and the processor may include a central processing unit (Central Processing Unit, CPU), or may further include another type of processor. Specifically, in an embodiment of this application, the processor of the electronic device may be a PWM control chip.

Specifically, in an embodiment of this application, the related processor may include, for example, a CPU, a DSP, a microcontroller, or a digital signal processor, and may further include a GPU, an embedded neural-network process unit (Neural-network Process Units, NPU), and an image signal processor (Image Signal Processing, ISP). The processor may further include a necessary hardware accelerator or a logic processing hardware circuit such as an ASIC, or one or more integrated circuits configured to control program execution of the technical solutions of this application. In addition, the processor may have a function of operating one or more software programs, and the software programs may be stored in a storage medium.

Specifically, in an embodiment of this application, the memory of the electronic device may be a read-only memory (read-only memory, ROM), another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile optical disc, a Blu-ray disc, or the like), a magnetic disk storage medium, or another magnetic storage device, or may be any computer-readable medium that can be configured to carry or store expected program code in a form of instructions or a data structure and that can be accessed by a computer.

Specifically, in an embodiment of this application, the processor and the memory may be combined into a processing apparatus, but more commonly, they are components independent of each other. The processor is configured to execute program code stored in the memory to implement the methods in embodiments of this application. During specific implementation, the memory may be alternatively integrated into the processor, or is independent of the processor.

Further, the device, the apparatus, the module, or the unit illustrated in embodiments of this application can be specifically implemented by a computer chip or an entity, or can be implemented by a product having a specific function.

A person skilled in the art should understand that embodiments of this application may be provided as a method, an apparatus, or a computer program product. Therefore, the present invention may use a form of hardware only embodiments, software only embodiments, or embodiments with a combination of software and hardware. In addition, the present invention may take a form of a computer program product implemented on one or more computer-usable storage media including computer-usable program code.

In some embodiments provided in this application, when any function is implemented in a form of a software functional unit and is sold or used as an independent product, the function may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application.

Specifically, an embodiment of this application further provides a computer-readable storage medium. The computer-readable storage medium stores a computer program. When the computer program is run on a computer, the computer is enabled to perform the method provided in embodiments of this application.

An embodiment of this application further provides a computer program product. The computer program product includes a computer program. When the computer program product runs on a computer, the computer is enabled to perform the method provided in embodiments of this application.

Embodiments of this application are described with reference to the flowcharts and/or block diagrams of the method, the device (apparatus), and the computer program product according to embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It should be further noted that, in embodiments of this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists, where A and B may be singular or plural. The character "/" usually indicates an "or" relationship between associated objects. At least one of the following items or a similar expression thereof indicates any combination of these items, including a single item or any combination of a plurality of items. For example, at least one of a, b, and c may represent: a, b, c, a and b, a and c, b and c, or a, b, and c, where a, b, and c may be singular or plural.

In embodiments of this application, the term "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a..." does not, without more constraints, preclude the existence of additional identical elements in the process, method, article, or device that includes the element.

This application can be described in the general context of executable computer instructions executed by a computer, for example, a program module. Generally, the program unit includes a routine, program, object, component, data structure, and the like for executing a particular task or implementing a particular abstract data type. This application may be practiced in distributed computing environments in which tasks are performed by remote processing devices that are connected through a communications network. In a distributed computing environment, program modules may be located in both local and remote computer storage media including storage devices.

Embodiments in this specification are all described in a progressive manner, for same or similar parts in embodiments, reference may be made to these embodiments, and each embodiment focuses on a difference from other embodiments. Especially, an apparatus embodiment is basically similar to a method embodiment, and therefore is described briefly; for related parts, reference may be made to partial descriptions in the method embodiment.

A person of ordinary skill in the art may be aware that, units and algorithm steps described in embodiments of this application may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

The foregoing descriptions are merely specific implementations of embodiments of this application. Any variation or replacement readily figured out by a person skilled in the art within the technical scope disclosed in this application shall fall within the protection scope in this application. Therefore, the protection scope of this application shall be subject to the protection scope of the claims.

## Claims

1. A task start method, comprising:
in a process in which a first task of a first application is run and performed on a screen, when the first task triggers a task jump for a second task, if a window is required to display the second task, invoking a window start interface of a system, wherein the window start interface is a system-level common standard application programming interface, and the window start interface is configured to generate a window parameter of a first floating window (600, 700, 800, 900, 1000); and
starting the second task based on the window start interface, comprising:
when the second task supports floating window display, starting the second task based on a current unchanged display status of the first task, creating the first floating window (600, 700, 800, 900, 1000) based on the window start interface, and displaying the second task based on the first floating window (600, 700, 800, 900, 1000), wherein the display status of the first task comprises full-screen display, and/or split-screen display, and/or floating window display.

2. The method according to claim 1, wherein in a process in which the second task is displayed based on the first floating window (600, 700, 800, 900, 1000), lifecycle statuses of displayed content of the first task and the second task are resumed at the same time.

3. The method according to claim 1, wherein in a process in which the second task is displayed based on the first floating window (600, 700, 800, 900, 1000), operation controls in displayed content of the first task and the second task both are in an available status, wherein an operation focus is switched based on an operation of a user between the displayed content of the first task and the displayed content of the second task.

4. The method according to claim 1, wherein the second task is a task of the first application, or the second task is a task of a second application other than the first application.

5. The method according to any one of claims 1 to 4, wherein after the displaying the second task based on the first floating window (600, 700, 800, 900, 1000), the method further comprises:
when full-screen display for the second task is triggered, and the first task supports the floating window display, closing the first floating window (600, 700, 800, 900, 1000), displaying the second task in a full-screen manner, creating a second floating window, and displaying the first task based on the second floating window.

6. The method according to any one of claims 1 to 4, wherein after the displaying the second task based on the first floating window (600, 700, 800, 900, 1000), the method further comprises:
when a current display status of the first task is the full-screen display, when split-screen display for the second task is triggered, and the first task supports the split-screen display, closing the first floating window (600, 700, 800, 900, 1000), and displaying the first task and the second task in a split-screen manner; and/or
when a current display status of the first task is the split-screen display with a third task, when split-screen display for the second task is triggered, and the third task supports the floating window display, closing the first floating window (600, 700, 800, 900, 1000), displaying the first task and the second task in a split-screen manner, creating a second floating window, and displaying the third task based on the second floating window; and/or
when a current display status of the first task is the floating window display, when split-screen display for the second task is triggered, and the first task supports the split-screen display, closing a floating window of the first task and the first floating window (600, 700, 800, 900, 1000), and displaying the first task and the second task in a split-screen manner.

7. The method according to any one of claims 1 to 4, wherein after the displaying the second task based on the first floating window (600, 700, 800, 900, 1000), the method further comprises:
when a current display status of the first task is the full-screen display, when a display status exchange for the second task is triggered, and the first task supports the floating window display, closing the first floating window (600, 700, 800, 900, 1000), displaying the second task in a full-screen manner, creating a second floating window, and displaying the first task based on the second floating window, wherein a size and a position of the second floating window are consistent with a size and a position of the first floating window (600, 700, 800, 900, 1000); and/or
when a current display status of the first task is the split-screen display with a third task, when a display status exchange for the second task is triggered, and the first task supports the floating window display, closing the first floating window (600, 700, 800, 900, 1000), displaying the third task and the second task in a split-screen manner, creating a second floating window, and displaying the first task based on the second floating window, wherein a size and a position of the second floating window are consistent with a size and a position of the first floating window (600, 700, 800, 900, 1000); and/or
when a current display status of the first task is the floating window display, and a display status exchange for the second task is triggered, positions and window size settings of the floating window of the first task and the first floating window (600, 700, 800, 900, 1000) are exchanged to be displayed.

8. The method according to claim 1, wherein the starting the second task based on the window start interface further comprises:
when the second task does not support the floating window display, starting the second task, exiting the first task or running the first task in a background, and displaying the second task in a full-screen manner.

9. The method according to claim 1, wherein the method further comprises:
in a process in which the first task is displayed in a full-screen manner, when the task jump for the second task is triggered, determining, by the first application, whether a window is required to display the second task.

10. An electronic device, wherein the electronic device comprises a memory configured to store computer program instructions and a processor configured to execute the program instructions, and when the computer program instructions are executed by the processor, the electronic device is triggered to perform the steps of the method according to any one of claims 1 to 9.

11. A computer-readable storage medium, wherein the computer-readable storage medium stores a computer program, and when the computer program runs on a computer, the computer is enabled to perform the method according to any one of claims 1 to 9.

## Patentansprüche

1. Verfahren zum Starten einer Aufgabe, umfassend:
in einem Prozess, in dem eine erste Aufgabe einer ersten Anwendung ausgeführt und auf einem Bildschirm durchgeführt wird, wenn die erste Aufgabe einen Aufgabensprung für eine zweite Aufgabe auslöst, wenn ein Fenster zum Anzeigen der zweiten Aufgabe erforderlich ist, Aufrufen einer Fensterstartschnittstelle eines Systems, wobei die Fensterstartschnittstelle eine allgemeine Standardanwendungsprogrammierschnittstelle auf Systemebene ist, und wobei die Fensterstartschnittstelle dazu konfiguriert ist, einen Fensterparameter eines ersten unverankerten Fensters (600, 700, 800, 900, 1000) zu generieren; und
Starten der zweiten Aufgabe basierend auf der Fensterstartschnittstelle, umfassend:
wenn die zweite Aufgabe eine Anzeige eines unverankerten Fensters unterstützt, Starten der zweiten Aufgabe basierend auf einem aktuellen unveränderten Anzeigestatus der ersten Aufgabe, Erzeugen des ersten unverankerten Fensters (600, 700, 800, 900, 1000) basierend auf der Fensterstartschnittstelle, und Anzeigen der zweiten Aufgabe basierend auf dem ersten unverankerten Fenster (600, 700, 800, 900, 1000), wobei der Anzeigestatus der ersten Aufgabe eine Vollbildanzeige und/oder eine Anzeige mit geteiltem Bildschirm und/oder eine Anzeige eines unverankerten Fensters umfasst.

2. Verfahren nach Anspruch 1, wobei in einem Prozess, in dem die zweite Aufgabe basierend auf dem ersten unverankerten Fenster (600, 700, 800, 900, 1000) angezeigt wird, Lebenszyklusstatus von angezeigtem Inhalt der ersten Aufgabe und der zweiten Aufgabe gleichzeitig fortgesetzt werden.

3. Verfahren nach Anspruch 1, wobei in einem Prozess, in dem die zweite Aufgabe basierend auf dem ersten unverankerten Fenster (600, 700, 800, 900, 1000) angezeigt wird, sich Bedienelemente in einem angezeigten Inhalt sowohl der ersten Aufgabe als auch der zweiten Aufgabe in einem verfügbaren Status befinden, wobei ein Bedienfokus basierend auf einem Bedienvorgang eines Benutzers zwischen dem angezeigten Inhalt der ersten Aufgabe und dem angezeigten Inhalt der zweiten Aufgabe umgeschaltet wird.

4. Verfahren nach Anspruch 1, wobei die zweite Aufgabe eine Aufgabe der ersten Anwendung ist oder die zweite Aufgabe eine Aufgabe einer zweiten Anwendung ist, die sich von der ersten Anwendung unterscheidet.

5. Verfahren nach einem der Ansprüche 1 bis 4, wobei nach dem Anzeigen der zweiten Aufgabe basierend auf dem ersten unverankerten Fenster (600, 700, 800, 900, 1000) das Verfahren ferner Folgendes umfasst:
wenn eine Vollbildanzeige für die zweite Aufgabe ausgelöst wird und die erste Aufgabe die Anzeige des unverankerten Fensters unterstützt, Schließen des ersten unverankerten Fensters (600, 700, 800, 900, 1000), Anzeigen der zweiten Aufgabe in einem Vollbildmodus, Erzeugen eines zweiten unverankerten Fensters, und Anzeigen der ersten Aufgabe basierend auf dem zweiten unverankerten Fenster.

6. Verfahren nach einem der Ansprüche 1 bis 4, wobei nach dem Anzeigen der zweiten Aufgabe basierend auf dem ersten unverankerten Fenster (600, 700, 800, 900, 1000) das Verfahren ferner Folgendes umfasst:
wenn ein aktueller Anzeigestatus der ersten Aufgabe die Vollbildanzeige ist, wenn eine Anzeige mit geteiltem Bildschirm für die zweite Aufgabe ausgelöst wird und die erste Aufgabe die Anzeige mit geteiltem Bildschirm unterstützt, Schließen des ersten unverankerten Fensters (600, 700, 800, 900, 1000), und Anzeigen der ersten Aufgabe und
der zweiten Aufgabe in einem geteilten Bildschirmmodus; und/oder wenn ein aktueller Anzeigestatus der ersten Aufgabe die Anzeige mit geteiltem Bildschirm mit einer dritten Aufgabe ist, wenn eine Anzeige mit geteiltem Bildschirm für die zweite Aufgabe ausgelöst wird und die dritte Aufgabe die Anzeige des unverankerten Fensters unterstützt, Schließen des ersten unverankerten Fensters (600, 700, 800, 900, 1000),
Anzeigen der ersten Aufgabe und der zweiten Aufgabe in einem geteilten Bildschirmmodus, Erzeugen eines zweiten unverankerten Fensters, und Anzeigen der dritten Aufgabe basierend auf dem zweiten unverankerten Fenster; und/oder
wenn ein aktueller Anzeigestatus der ersten Aufgabe die Anzeige des unverankerten Fensters ist, wenn eine Anzeige mit geteiltem Bildschirm für die zweite Aufgabe ausgelöst wird und die erste Aufgabe die Anzeige mit geteiltem Bildschirm unterstützt, Schließen eines unverankerten Fensters der ersten Aufgabe und des ersten unverankerten Fensters (600, 700, 800, 900, 1000), und Anzeigen der ersten Aufgabe und der zweiten Aufgabe in einem geteilten Bildschirmmodus.

7. Verfahren nach einem der Ansprüche 1 bis 4, wobei nach dem Anzeigen der zweiten Aufgabe basierend auf dem ersten unverankerten Fenster (600, 700, 800, 900, 1000) das Verfahren ferner Folgendes umfasst:
wenn ein aktueller Anzeigestatus der ersten Aufgabe die Vollbildanzeige ist, wenn ein Anzeigestatuswechsel für die zweite Aufgabe ausgelöst wird und die erste Aufgabe die Anzeige des unverankerten Fensters unterstützt, Schließen des ersten unverankerten Fensters (600, 700, 800, 900, 1000), Anzeigen der zweiten Aufgabe in einem Vollbildmodus, Erzeugen eines zweiten unverankerten Fensters, und Anzeigen der ersten Aufgabe basierend auf dem zweiten unverankerten Fenster, wobei eine Größe und eine Position des zweiten unverankerten Fensters mit einer Größe und einer Position des ersten unverankerten Fensters (600, 700, 800, 900, 1000) übereinstimmen; und/oder
wenn ein aktueller Anzeigestatus der ersten Aufgabe die Anzeige mit geteiltem Bildschirm mit einer dritten Aufgabe ist, wenn ein Anzeigestatuswechsel für die zweite Aufgabe ausgelöst wird und die erste Aufgabe die Anzeige des unverankerten Fensters unterstützt, Schließen des ersten unverankerten Fensters (600, 700, 800, 900, 1000), Anzeigen der dritten Aufgabe und der zweiten Aufgabe in einem geteilten Bildschirmmodus, Erzeugen eines zweiten unverankerten Fensters, und Anzeigen der ersten Aufgabe basierend auf dem zweiten unverankerten Fenster, wobei eine Größe und eine Position des zweiten unverankerten Fensters mit einer Größe und einer Position des ersten unverankerten Fensters (600, 700, 800, 900, 1000) übereinstimmen; und/oder
wenn ein aktueller Anzeigestatus der ersten Aufgabe die Anzeige des unverankerten Fensters ist und ein Anzeigestatuswechsel für die zweite Aufgabe ausgelöst wird, werden Positionen und Fenstergrößeneinstellungen des unverankerten Fensters der ersten Aufgabe und des ersten unverankerten Fensters (600, 700, 800, 900, 1000) zur Anzeige gewechselt.

8. Verfahren nach Anspruch 1, wobei das Starten der zweiten Aufgabe basierend auf der Fensterstartschnittstelle ferner Folgendes umfasst:
wenn die zweite Aufgabe nicht die Anzeige des unverankerten Fensters unterstützt, Starten der zweiten Aufgabe, Verlassen der ersten Aufgabe oder Ausführen der ersten Aufgabe in einem Hintergrund, und Anzeigen der zweiten Aufgabe in einem Vollbildmodus.

9. Verfahren nach Anspruch 1, wobei das Verfahren ferner Folgendes umfasst:
in einem Prozess, in dem die erste Aufgabe in einem Vollbildmodus angezeigt wird, wenn der Aufgabensprung für die zweite Aufgabe ausgelöst wird, Bestimmen, durch die erste Anwendung, ob ein Fenster zum Anzeigen der zweiten Aufgabe erforderlich ist.

10. Elektronisches Gerät, wobei das elektronische Gerät einen Speicher, der dazu konfiguriert ist, Computerprogrammanweisungen zu speichern, und einen Prozessor, der dazu konfiguriert ist, die Programmanweisungen auszuführen, umfasst, und wobei, wenn die Computerprogrammanweisungen durch den Prozessor ausgeführt werden, ausgelöst wird, dass das elektronische Gerät die Schritte des Verfahrens nach einem der Ansprüche 1 bis 9 durchführt.

11. Computerlesbares Speichermedium, wobei das computerlesbare Speichermedium ein Computerprogramm speichert, und wobei, wenn das Computerprogramm auf einem Computer ausgeführt wird, dem Computer ermöglicht wird, das Verfahren nach einem der Ansprüche 1 bis 9 durchzuführen.

## Revendications

1. Procédé de démarrage de tâche, comprenant :
lors d'un processus dans lequel une première tâche d'une première application est exécutée et réalisée sur un écran, lorsque la première tâche déclenche un saut de tâche pour une deuxième tâche, si une fenêtre doit afficher la deuxième tâche, l'appel d'une interface de démarrage de fenêtre d'un système, dans lequel l'interface de démarrage de fenêtre est une interface de programmation d'application standard commune au niveau du système,
et l'interface de démarrage de fenêtre est configurée pour générer un paramètre de fenêtre d'une première fenêtre flottante (600, 700, 800, 900, 1000) ; et
le démarrage de la deuxième tâche sur la base de l'interface de démarrage de fenêtre, comprenant :
lorsque la deuxième tâche prend en charge l'affichage de fenêtre flottante, le démarrage de la deuxième tâche sur la base d'un état d'affichage courant non modifié de la première tâche, la création de la première fenêtre flottante (600, 700, 800, 900, 1000) sur la base de l'interface de démarrage de fenêtre, et l'affichage de la deuxième tâche sur la base de la première fenêtre flottante (600, 700, 800, 900, 1000), dans lequel l'état d'affichage de la première tâche comprend un affichage plein écran et/ou un affichage sur écran partagé et/ou un affichage sur fenêtre flottante.

2. Procédé selon la revendication 1, dans lequel lors d'un processus dans lequel la deuxième tâche est affichée sur la base de la première fenêtre flottante (600, 700, 800, 900, 1000), des états de cycle de vie de contenu affiché de la première tâche et de la deuxième tâche sont repris en même temps.

3. Procédé selon la revendication 1, dans lequel lors d'un processus dans lequel la deuxième tâche est affichée sur la base de la première fenêtre flottante (600, 700, 800, 900, 1000), des commandes d'opération dans le contenu affiché de la première tâche et de la deuxième tâche sont toutes deux dans un état disponible, dans lequel une cible d'opération est commutée sur la base d'une opération d'un utilisateur entre le contenu affiché de la première tâche et le contenu affiché de la deuxième tâche.

4. Procédé selon la revendication 1, dans lequel la deuxième tâche est une tâche de la première application, ou la deuxième tâche est une tâche d'une seconde application autre que la première application.

5. Procédé selon l'une quelconque des revendications 1 à 4, dans lequel après l'affichage de la deuxième tâche sur la base de la première fenêtre flottante (600, 700, 800, 900, 1000), le procédé comprend en outre :
lorsqu'un affichage plein écran pour la deuxième tâche est déclenché, et que la première tâche prend en charge l'affichage de fenêtre flottante, la fermeture de la première fenêtre flottante (600, 700, 800, 900, 1000), l'affichage de la deuxième tâche en plein écran, la création d'une seconde fenêtre flottante et l'affichage de la première tâche sur la base de la seconde fenêtre flottante.

6. Procédé selon l'une quelconque des revendications 1 à 4, dans lequel après l'affichage de la deuxième tâche sur la base de la première fenêtre flottante (600, 700, 800, 900, 1000), le procédé comprend en outre :
lorsqu'un état d'affichage courant de la première tâche est l'affichage plein écran, lorsqu'un affichage sur écran partagé pour la deuxième tâche est déclenché, et que la première tâche prend en charge l'affichage sur écran partagé, la fermeture de la première fenêtre flottante (600, 700, 800, 900, 1000) et l'affichage de la première tâche et de la deuxième tâche sur écran partagé ; et/ou
lorsqu'un état d'affichage courant de la première tâche est l'affichage sur écran partagé avec une troisième tâche, lorsqu'un affichage sur écran partagé pour la deuxième tâche est déclenché, et que la troisième tâche prend en charge l'affichage de fenêtre flottante, la fermeture de la première fenêtre flottante (600, 700, 800, 900, 1000), l'affichage de la première tâche et de la deuxième tâche sur écran partagé, la création d'une seconde fenêtre flottante et l'affichage de la troisième tâche sur la base de la seconde fenêtre flottante ; et/ou
lorsqu'un état d'affichage courant de la première tâche est l'affichage de fenêtre flottante, lorsqu'un affichage sur écran partagé pour la deuxième tâche est déclenché, et que la première tâche prend en charge l'affichage sur écran partagé, la fermeture d'une fenêtre flottante de la première tâche et de la première fenêtre flottante (600, 700, 800, 900, 1000) et l'affichage de la première tâche et de la deuxième tâche sur écran partagé.

7. Procédé selon l'une quelconque des revendications 1 à 4, dans lequel après l'affichage de la deuxième tâche sur la base de la première fenêtre flottante (600, 700, 800, 900, 1000), le procédé comprend en outre :
lorsqu'un état d'affichage courant de la première tâche est l'affichage plein écran, lorsqu'un échange d'état d'affichage pour la deuxième tâche est déclenché, et que la première tâche prend en charge l'affichage de fenêtre flottante, la fermeture de la première fenêtre flottante (600, 700, 800, 900, 1000), l'affichage de la deuxième tâche en plein écran, la création d'une seconde fenêtre flottante et l'affichage de la première tâche sur la base de la seconde fenêtre flottante, dans lequel une taille et une position de la seconde fenêtre flottante sont cohérentes avec une taille et une position de la première fenêtre flottante (600, 700, 800, 900, 1000) ; et/ou
lorsqu'un état d'affichage courant de la première tâche est l'affichage sur écran partagé avec une troisième tâche, lorsqu'un échange d'état d'affichage pour la deuxième tâche est déclenché, et que la première tâche prend en charge l'affichage de fenêtre flottante, la fermeture de la première fenêtre flottante (600, 700, 800, 900, 1000), l'affichage de la troisième tâche et de la deuxième tâche sur écran partagé, la création d'une seconde fenêtre flottante et l'affichage de la première tâche sur la base de la seconde fenêtre flottante, dans lequel une taille et une position de la seconde fenêtre flottante sont cohérentes avec une taille et une position de la première fenêtre flottante (600, 700, 800, 900, 1000) ; et/ou
lorsqu'un état d'affichage courant de la première tâche est l'affichage de fenêtre flottante, et qu'un échange d'état d'affichage pour la deuxième tâche est déclenché, des positions et des réglages de taille de fenêtre de la fenêtre flottante de la première tâche et de la première fenêtre flottante (600, 700, 800, 900, 1000) sont échangés pour l'affichage.

8. Procédé selon la revendication 1, dans lequel le démarrage de la deuxième tâche sur la base de l'interface de démarrage de fenêtre comprend en outre :
lorsque la deuxième tâche ne prend pas en charge l'affichage de fenêtre flottante, le démarrage de la deuxième tâche, la sortie de la première tâche ou l'exécution de la première tâche en arrière-plan et l'affichage de la deuxième tâche en plein écran.

9. Procédé selon la revendication 1, dans lequel le procédé comprend en outre :
lors d'un processus dans lequel la première tâche est affichée en plein écran, lorsque le saut de tâche pour la deuxième tâche est déclenché, la détermination, par la première application, de si une fenêtre est nécessaire pour afficher la deuxième tâche.

10. Dispositif électronique, dans lequel le dispositif électronique comprend une mémoire configurée pour stocker des instructions de programme informatique et un processeur configuré pour exécuter les instructions de programme, et lorsque les instructions de programme informatique sont exécutées par le processeur, le dispositif électronique est déclenché pour réaliser les étapes du procédé selon l'une quelconque des revendications 1 à 9.

11. Support de stockage lisible par ordinateur, dans lequel le support de stockage lisible par ordinateur stocke un programme informatique, et lorsque le programme informatique est exécuté sur un ordinateur, l'ordinateur est activé pour exécuter le procédé selon l'une quelconque des revendications 1 à 9.
